# EUROPEAN PATENT APPLICATION

(11) **EP 3 815 518 A2**
(43) Date of publication of application: **05.05.2021**
(21) Application number: 20204982.1
(22) Date of filing: 30.10.2020
(51) Int. Cl.: A01G 18/70, B65G 51/02

(54) **DEVICE FOR TRANSPORTING AND DISCHARGING MUSHROOMS**

(30) Priority: 01.11.2019 NL 2024147
(71) Applicant: Lemmen, Jacobus Alexander Jozef, 5928 LW Venlo (NL); Van Doremaele, Marcus Gerardus Maria, 5334 LB Velddriel (NL)
(72) Inventor: Lemmen, Jacobus Alexander Jozef, 5928 LW Venlo (NL); Van Doremaele, Marcus Gerardus Maria, 5334 LB Velddriel (NL)
(74) Representative: Patentwerk B.V.

(57) **Abstract**

The present invention relates to a device for transporting and discharging mushrooms, comprising a first conveyor belt, in particular a harvesting conveyor belt, following a trajectory along at least two wheels or pulleys, wherein in particular at least one wheel or pulley is driven, and wherein the first conveyor belt conveyor belt surface comprises openings for receiving mushroom stipes, a second conveyor belt, following a trajectory that extends at least partly within the trajectory of the first conveyor belt, and wherein an outwardly projecting surface of the second conveyor belt gradually approaches an inwardly projecting surface of the first conveyor belt along a predetermined distance.

## Description

The present invention relates to a device for transporting and discharging mushrooms. In particular the invention relates to a device for discharging mushrooms from a harvesting conveyor belt.

It is known in the art to make use of harvesting conveyor belts when harvesting mushrooms. These belts are usually arranged besides or along the growing beds for the mushrooms and may extend to a sorting and packaging location or station. The use of conveyor belts takes away the need for harvesters to carry baskets with them.

The harvesting conveyor belts according to the art can mainly be divided in three types: those with a closed surface, those with holes or apertures for receiving the stipe of a mushroom, and those that are actually composed of two conveyor belts that are placed next to each other, with a gap in between for receiving the stipe of a mushroom. The present invention relates to those with holes, which may have various forms, for instance round holes, or lozenge shaped holes or the like, as described in the Dutch patent application N2023167 by the same applicant, which is herein incorporated by reference.

In either case, the mushrooms are transferred by the conveyor belt up to a point where they need to be unloaded. This can be done manually or in an automated way, and may also take place in multiple stages, for instance together with a sorting process.

In any case there may be mushrooms that need to be discharged from the conveyor belt at its end. If the mushrooms are not taken off the harvesting conveyor belt before its end, they may get stuck between the conveyor belt and its wheel or pulley, which leads to loss of mushrooms and undesired pollution of the harvesting conveyor belt.

It is a goal of the present invention to propose at least a solution for the above mentioned disadvantage, or at least to provide a useful alternative to the prior art.

The invention thereto relates to a device for transporting and discharging mushrooms, comprising: a first conveyor belt, in particular a harvesting conveyor belt, following a trajectory along at least two wheels or pulleys, wherein in particular at least one wheel or pulley is driven, and wherein the first conveyor belt conveyor belt surface comprises openings for receiving mushroom stipes; a second conveyor belt, following a trajectory that extends at least partly within the trajectory of the first conveyor belt, and wherein an outwardly projecting surface of the second conveyor belt gradually approaches an inwardly projecting surface of the first conveyor belt along a predetermined distance.

The at least two wheels or pulleys are preferably at the extremes of the trajectory of the first conveyor belt. One pulley is at the start, the other at the end. The second conveyor belt is looped around the second pulley, which is the end pulley. It is also looped around a small pulley that falls within the forward and backward going stretch of the first conveyor. Evidently further pulleys may be present between the first and the second pulley, and/or between the second and the first, seen in a backward stretch of the conveyor belt.

The effect of the outwardly projecting surface of the second conveyor belt gradually approaching the inwardly projecting surface of the first conveyor belt is that the stipes of the mushrooms are slowly pushed out of their openings when they arrive at the location where the second conveyor belt is arranged. This may most logically be at or near a downstream end of the first conveyor belt. Furthermore, the second conveyor belt may be located at a location where the first conveyor belt extends mainly in the vertical plane.

The mushrooms are then lifted out of the openings in the first conveyor belt and, when the first conveyor belt turns around its wheel or pulley, discharged. There may be another conveyor belt below its discharge location or there may be a bucket or other receptacle present.

In a preferred embodiment, the outwardly projecting surface of the second conveyor belt approaches the inwardly projecting surface of the first conveyor belt to such extend that it touches the latter. This way, it can be assured that the mushrooms are actually forced out of the openings of the first conveyor belt.

In order to obtain a simple construction, the first and second conveyor belt may be arranged around the same wheel or pulley. This may be either a driven or a dummy wheel or pulley. The wheel or pulley may have a recess to receive the second conveyor belt and/or to keep it in place or comprise a flange to keep the first conveyor belt or even the first and second conveyor belt in place. The wheel or pulley may have a recess that has a depth which is at least the thickness of the first conveyor belt and the second conveyorbelt together. The second conveyor may for instance extend between the wheel or pulley around which the first conveyor belt extends and a wheel or pulley with a smaller diameter than the wheel or pulley around which the first conveyor belt extends.

However, in an alternative embodiment, the second belt is looped around its own pulleys. In this embodiment, a pulley close to the end pulley of the first conveyor belt should be small, and arranged close to the second pulley of the first conveyor belt, such that a mushroom has no occasion to fall back into the aperture in its conveyor belt.

Preferably, the second conveyor belt has an essentially closed surface, for supporting the mushroom stipes. The second conveyor belt may have the same width, but may also be smaller than the first conveyor belt but preferably it has at least the width of the openings in the first conveyor belt. The distance over which the outwardly projecting surface of the second conveyor belt gradually approaches the inwardly projecting surface of the first conveyor belt is preferably at least 20 cm.

In an alternative embodiment, there is no second conveyor belt, but one of the wheels or pulleys, in particular the most downstream pulley, is provided with protrusions, aligned with the openings in the conveyor belt, which protrusions serve to remove the mushrooms from the harvesting belt. The protrusions may be wedge-shaped or otherwise shaped such that they compensate for the annual shape of the wheel or pulley, such that they push the mushroom stipe as straight upward as possible. The protrusions may form part of the wheel or pulley, or may be one or more separate parts.

Once the mushroom is pushed or lifted out of the aperture in the conveyor belt, it should be taken away from said belt. In the simplest form, it is caught at the location where the first conveyor belt is looped around its end pulley. It may be caught directly in a mushroom package, which may be provided on a separate conveyor belt too, for instance by a destacker of mushroom packages.

In an alternative form, a gutter is provided, to catch the mushrooms, and guide them to a basket or a mushroom package.

A preferred embodiment according to the invention relates to a system for transporting mushrooms along a path of transportation, comprising a guidance, extending from a pick-up location to a drop-off location for mushrooms, wherein the guidance comprises at least two side walls, facing each other and defining the path of transportation in between them; wherein the side walls are each provided with at least one but preferably multiple nozzles for providing pressurized air to the path of transportation; wherein the nozzles are oriented such that the resulting air stream has at least an upwardly directed component, but preferably also a component in the direction which the path of transportation extends, the system further comprising a compressor for providing pressurized air to the nozzles, wherein the drop-off location comprises a position adjacent to the end of the path of transportation adapted for holding a mushroom package for receiving the transported mushroom.

The pick-up location may be at the end of a first conveyor belt of a system as described above, or any other system for delivering picked mushrooms.

This system of transportation of mushrooms is beneficial for the mushrooms, since they are hendled without falling or even being touched, which avoids dark spots developing on the mushrooms.

The system preferably comprises a cooling system, for cooling air for the nozzles. This adds up to the careful handling, conserves the mushrooms, and allows to integrate a cooling step early in a mushroom packaging line.

Such packaging line or a line (which may be a conveyor belt too) for transporting packages with mushrooms, but also the above mentioned path of transportation may be covered in order to keep the cooled air around the mushrooms and circumstances ideal.
The invention will now be elucidated with reference to the following figures. Herein:
- Figure 1 is a simplified representation of a device according to the invention;
- Figure 2 is a schematic side view of the device according to the invention;
- Figure 3a shows a detail of the embodiment from figures 1 and 2;
- Figure 3b shows a pulley for use in the embodiment of figure 3a
- Figure 4a, b show a schematic side view of a first alternative embodiment; and
- Figure 5 shows a cross section of a pulley of a second alternative embodiment;
- Figure 6 shows a simplified schematic view of an alternative for the embodiment from figure 1; and
- Figure 7 shows yet another aspect of the present invention.

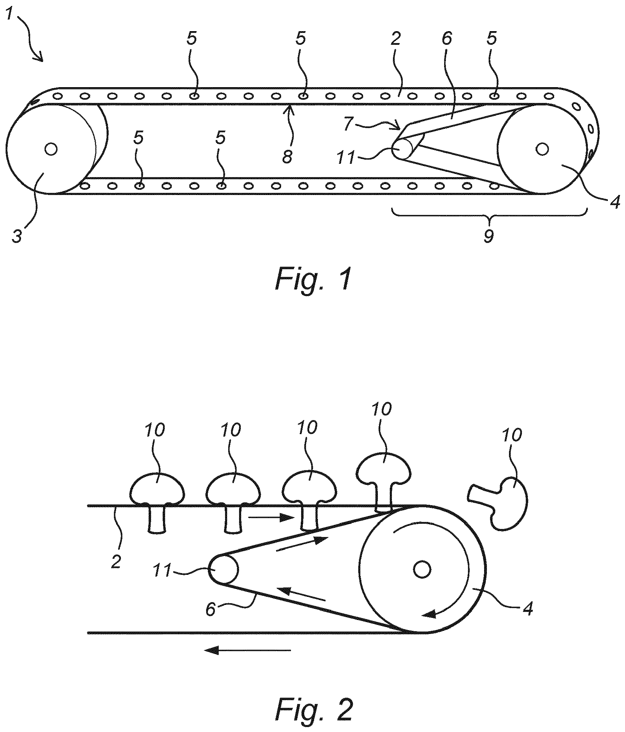

Figure 1 is a simplified representation of a device 1 according to the invention, for transporting and discharging mushrooms (not shown), comprising a first conveyor belt 2, in particular a harvesting conveyor belt, following a trajectory along two pulleys 3, 4, wherein at least one wheel or pulley is driven, and wherein the first conveyor belt conveyor belt surface comprises openings 5 for receiving mushroom stipes, a second conveyor belt 6, following a trajectory that extends within the trajectory of the first conveyor belt, and wherein an outwardly projecting surface 7 of the second conveyor belt gradually approaches an inwardly projecting surface 8 of the first conveyor belt 2 along a predetermined distance 9.

Figure 2 is a schematic side view of the device 1 from figure 1. Same referential numbers indicate same parts. Arrows shows the direction of movement of the various parts during normal use. It is visible that the mushrooms 10 are pushed out of the openings in conveyor belt 2 once their stipes encounter conveyor belt 6. This pushing goes more gradually than when it was done by a wheel or pulley, as is common in the state of the art.

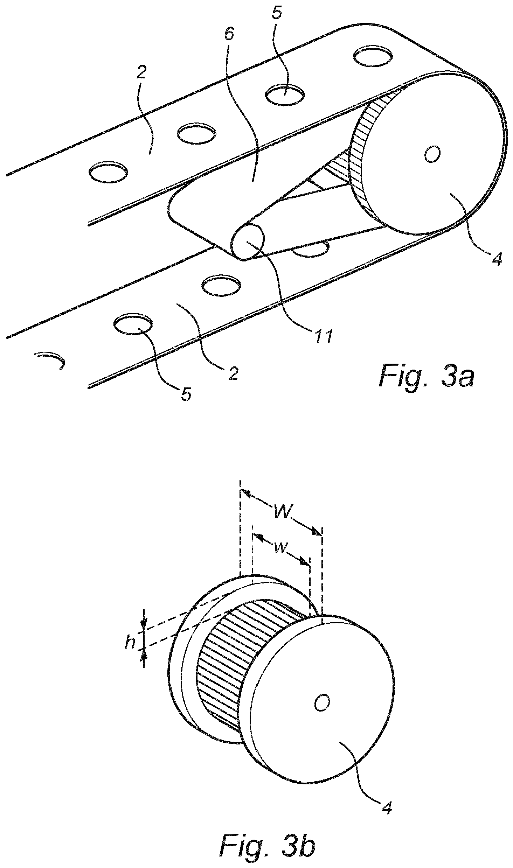

Figure 3a shows a first detail of the embodiment from figures 1 and 2, wherein it is visible that the second conveyor 6 extends between the pulley 4 around which the first conveyor belt 2 extends and a pulley 11 with a smaller diameter than the pulley around which the first conveyor belt extends. It is also visible that the second conveyor belt 6 has a smaller width w than the width W of the first conveyor belt 2.

Figure 3b shows a perspective view of a pulley 4 with a recess for receiving the second conveyor belt 6. The recess has a width that is at least the width w of the second conveyor 6 and a total width that is at least the width of the first conveyor belt W. The height h may be at least the thickness of the second conveyor belt 6. It may also be more.

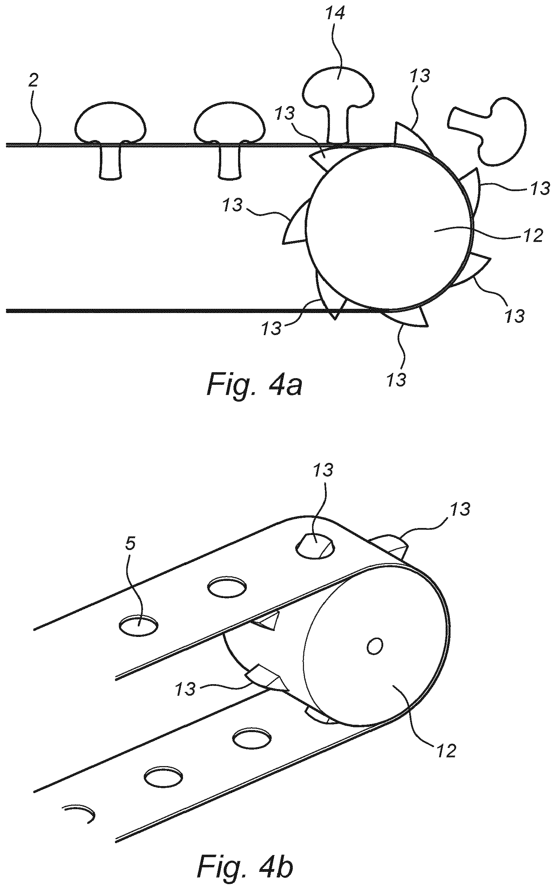

Figure 4a is a schematic side view of a first alternative embodiment showing a pulley 12 provided with protrusions, having a shape that compensates for the arcuate shape of the pulley and designed such that it lifts the mushroom 14 as straight as possible from the conveyor belt. The shape may be a ramp, and the protrusions may be dimensioned and distributed such that they correspond with the openings 5 in the conveyor belt 2. Figure 4b shows a perspective view. This pulley may also be used as a driven pulley, since the protrusions decrease the chance of slipping of the conveyor belt over the pulley.

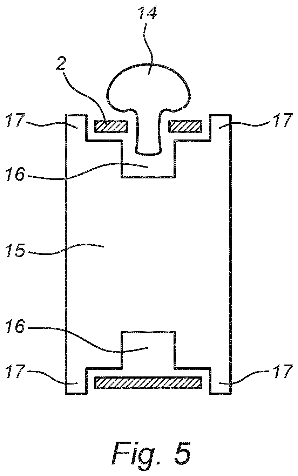

Figure 5 shows a cross section of a pulley 15 of a second alternative embodiment. This pulley 15 has a recess 16 that has a depth that is larger than the highest stipe that is expected, so that the mushrooms are discharged without a need to push them. It is also provided with optional flanges 17 to guide the conveyor belt 2.

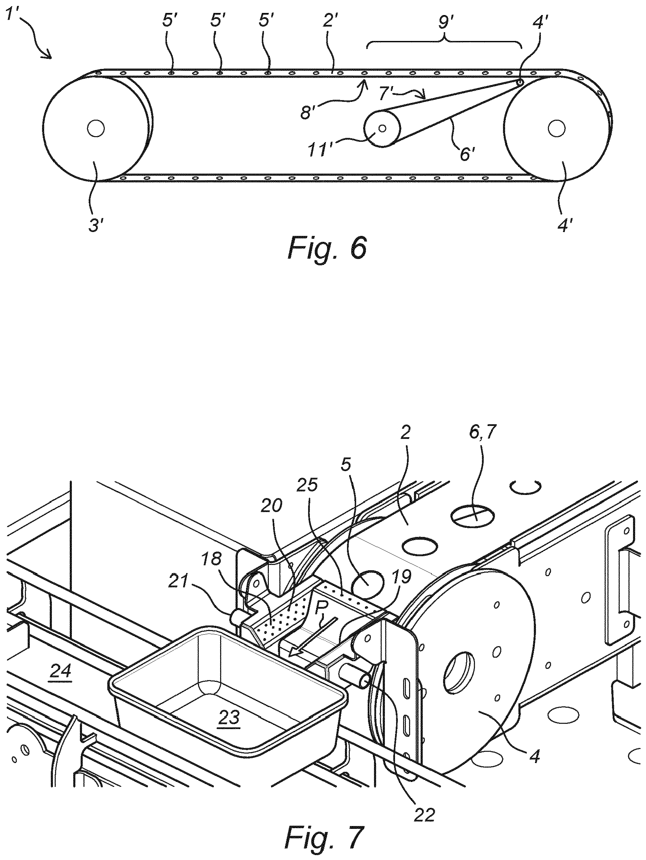

Figure 6 is a simplified representation of a device 1' according to the invention, for transporting and discharging mushrooms (not shown), that forms an alternative to the embodiment of figure 1. The device 1' comprises a first conveyor belt 2', in particular a harvesting conveyor belt, following a trajectory along two pulleys 3', 4', wherein at least one wheel or pulley is driven, and wherein the first conveyor belt conveyor belt surface comprises openings 5' for receiving mushroom stipes, a second conveyor belt 6', following a trajectory that extends within the trajectory of the first conveyor belt, and wherein an outwardly projecting surface 7' of the second conveyor belt gradually approaches an inwardly projecting surface 8' of the first conveyor belt 2' along a predetermined distance 9'. The second conveyor belt 6' is looped around its dedicated pulleys 11' and 4". This system has the advantage that no further modification is required to pulley 4'.

Figure 7 shows the device for transporting and discharging mushrooms from figure 1, comprising a first conveyor belt 2, which is a harvesting conveyor belt, following a trajectory along two pulleys 3 (not visible) and 4, wherein at least one wheel or pulley is driven, and wherein the first conveyor belt conveyor belt surface comprises openings 5 for receiving mushroom stipes, a second conveyor belt 6, following a trajectory that extends within the trajectory of the first conveyor belt, and wherein an outwardly projecting surface 7 of the second conveyor belt gradually approaches an inwardly projecting surface 8 (not visible) of the first conveyor belt 2.

The device is further provided with a system for transporting mushrooms along a path of transportation, comprising a guidance, extending from a pick-up location to a drop-off location for mushrooms, wherein the guidance comprises at least two side walls 18, 19, facing each other and defining the path of transportation P in between them; wherein the side walls are each provided with at least one but preferably multiple nozzles 20 for providing pressurized air to the path of transportation. The ozzles are oriented such that the resulting air stream has at least an upwardly directed component, but preferably also a component in the direction which the path of transportation extends, the system further comprising a compressor (not shown) for providing pressurized air to the nozzles via connections 21 and 22, wherein the drop-off location comprises a position adjacent to the end of the path of transportation adapted for holding a mushroom package 23 for receiving the transported mushroom. The package is located in its own system of conveyance 24. The pick-up location is at the end of a first conveyor belt. In the given example, there is also an array 25 of nozzles at the pick-up location.

## Claims

1. System for transporting mushrooms along a path of transportation, comprising:
- A guidance, extending from a pick-up location to a drop-off location for mushrooms, wherein the guidance comprises
∘ at least two side walls, facing each other and defining the path of transportation in between them;
wherein
∘ the side walls are each provided with at least one but preferably multiple nozzles for providing pressurized air to the path of transportation;
wherein
∘ the nozzles are oriented such that the resulting air stream has at least an upwardly directed component, but preferably also a component in the direction which the path of transportation extends;
- a compressor for providing pressurized air to the nozzles;
wherein
- the drop-off location comprises a position adjacent to the end of the path of transportation adapted for holding a mushroom package for receiving the transported mushroom.

2. System according to claim 1, comprising a cooling system, for cooling air for the nozzles.

3. System according to claim 2, wherein the path of transportation is covered, in order to keep the cool air around the mushrooms prior to and during packaging.

4. Device for transporting and discharging mushrooms, comprising:
- a first conveyor belt, in particular a harvesting conveyor belt,
- following a trajectory along at least two wheels or pulleys, wherein in particular at least one wheel or pulley is driven, and wherein
- the first conveyor belt conveyor belt surface comprises openings for receiving mushroom stipes;
- A second conveyor belt, following a trajectory that extends at least partly within the trajectory of the first conveyor belt, and wherein:
- An outwardly projecting surface of the second conveyor belt gradually approaches an inwardly projecting surface of the first conveyor belt along a predetermined distance at a downstream end of the first conveyor belt.

5. Device according to claim 4, wherein the outwardly projecting surface of the second conveyor belt touches the inwardly projecting surface of the second conveyor belt.

6. Device according to claim 4 or 5, wherein the first and second conveyor belt are arranged around the same wheel or pulley.

7. Device according to claim 6, wherein the second conveyor extends between the wheel or pulley around which the first conveyor belt extends and a wheel or pulley with a smaller diameter than the wheel or pulley around which the first conveyor belt extends.

8. Device according to any of claims 4-7, wherein the second conveyor belt has an essentially closed surface.

9. Device according to any of claims 4-8, wherein the second conveyor belt is smaller than the first conveyor belt.

10. Device according to claim 9, wherein the second transporter has at least the width of the openings in the first conveyor belt.

11. Device according to any of the preceding claims, wherein the distance over which the outwardly projecting surface of the second conveyor belt gradually approaches the inwardly projecting surface of the first conveyor belt is at least 20 cm.

12. Pulley for a harvesting conveyor, provided with tapered protrusions that extend from the surface for pushing mushrooms from openings in a harvesting conveyor.

13. Pulley for a harvesting conveyor, provided with a recess in its surface for providing space for stipes of mushrooms placed in openings in a harvesting conveyor.
